# EUROPÄISCHE PATENTSCHRIFT

(11) **EP 2 780 602 B1**
(45) Veröffentlichungstag und Bekanntmachung des Hinweises auf die Patenterteilung: **12.04.2017**
(21) Anmeldenummer: 12818878.6
(22) Anmeldetag: 14.11.2012
(51) Int. Cl.: F16B 5/07, A44B 18/00

(54) **NOPPENRASTER VERBINDUNGSSYSTEM**
STUD-PATTERN CONNECTING SYSTEM
SYSTÈME D'ASSEMBLAGE À BOUCLES EN GRILLE

(30) Priorität: 15.11.2011 DE 202011107861 U
(43) Veröffentlichungstag der Anmeldung: 24.09.2014
(73) Patentinhaber: Köhler, Andreas, 06526 Sangerhausen (DE)
(72) Erfinder: Köhler, Andreas, 06526 Sangerhausen (DE)
(86) Internationale Anmeldenummer: PCT/EP2012/004725
(87) Internationale Veröffentlichungsnummer: WO 2013/072043

(56) Entgegenhaltungen:
- WO-A2-91/12392
- DE-A1- 1 807 993
- FR-A- 1 584 566
- FR-A1- 2 264 209
- US-A- 5 983 467
- US-A1- 2007 077 390

## Beschreibung

Bei der Erfindung handelt es sich um ein alternatives Verbindungssystem zu den allgemein verbreiteten Klettsystemen.

Das Prinzip der Klettverschlüsse besteht im Wesentlichen darin, dass sich eine mit Haken mannigfaltigster Ausformung (hakenförmig, harpunenförmig, T-förmig, pilzförmig) versehene Fläche in einer textilen Fläche mit oberflächlichem Schlaufengewebe verhakt.
Formen mit pilzförmigen Elementen sind dabei auch im Stande, sich nicht nur mit Schlingengewebe, sondern auch mit gleichartig gestalteten Oberflächen zu verbinden.
Eine Sonderform ist das METAKLETT-System, bei dem Stahlbänder mit einem Hakensystem versehen sind, die in ein Ösenband einrasten.

Die üblichen Systeme haben zumindest die folgenden Nachteile:

In den feingliedrigen Hakenssystemen bleiben im Laufe der Zeit Flusen, Textilfäden u.a. hängen. Diese lassen sich nur mühevoll entfernen und führen zur Abnahme der Haftfähigkeit.
Gerade bei der Verwendung im medizinischen Bereich entstehen so hygienische Probleme, da die Flusen auch durch Waschen nicht entfernt werden können. Das bekannte Hakensystem verhakt sich nicht nur in ihrem dafür vorgesehenen Gegenstück, sondern auch an anderen textilen Teilen. Das ist lästig im Gebrauch und führt zu schleichenden Beschädigungen der betroffenen Regionen.

Die bekannten Klettsysteme stellen eine elastische Verbindung her. Das ist für Textilverschlüsse kein Nachteil. Da Klettverschlüsse aber auch z.B. zum Befestigen von Schleifpapier auf Werkzeugträgern verwendet werden, reduziert das in diesen Fällen die Effektivität der Kraftübertragung. Besonders auffällig ist das bei Schwingschleifern.
Bei der Verwendung für die Verbindung von Werkzeugen mit Werkzeugträgern erweisen sich Klettverbindungen nicht als beständig, da sie sich durch Vibration, gerade bei kleineren Flächen, lösen.
Klettverschlüsse finden in großem Umfang Verwendung als Verschluss für Bekleidung und Schuhwerk. Dabei erweist es sich als Nachteil, dass sich die mit Schlingengewebe versehene Seite mit Wasser vollsaugt und gegenüber dem ansonsten wetterfestem Material sehr langsam trocknet.
Mit Klettverschlüssen lassen sich keine dichtschließenden Verbindungen herstellen. Die Belastbarkeit von Klettverschlüssen kann nur empirisch ermittelt werden, da dass Verhaken im Schlingengewebe oder in pilzförmigen Strukturen nicht eindeutig, sondern zufällig erfolgt.

Die Anzahl der für die Herstellung von Klettsystemen verwendbaren Materialien ist stark eingeschränkt. Elastische Materialien wie Gummi und Silikon können nicht zur Anwendung kommen. Bis auf das METAKLETT-System sind Klettverschlüsse aus brennbaren Materialen hergestellt.

Abgesehen vom gestanzten METAKLETT-System ist die Herstellung der Bänder aufwendig. Eine Produktion durch Spritzguss oder Prägung ist nicht möglich.

Das bekannte METAKLETT-System erfordert außerdem eine genaue Positionierung der beiden Verbindungsflächen. Ein einfaches Zusammendrücken, ohne genaue Justierung, wie beim gängigen Klettband ist hier nicht möglich. Das METAKLETT-System verfügt über scharfe hervorstehende Kanten, die zu Verletzungen führen können.

Ein weiteres gattungsgemäßes Verbindungssystem ist aus der US 5,983,467 A bekannt.

Aufgabe der Erfindung ist es, die Nachteile des Standes der Technik zu überwinden und ein Noppenrasterverbindungssystem zur Verfügung zu stellen, welches auch weitere Anwendungen ermöglicht.

Die im Schutzanspruch 1 angegebenen Merkmale der Erfindung sollen diese Probleme lösen.

Die Aufgabe der Erfindung wird durch ein Noppenrasterverbindungssystem mit den Merkmalen des Anspruchs 1 gelöst.

Erfindungswesentlich ist, dass die Noppen 2 als dreifach oder vierfach segmentierte Rotationskörper ausgebildet sind, die Rotationskörper zumindest über eine Spitze, konisch verlaufende Gleitflächen und Hinterscheidungen verfügen, und in einem rechteckigen oder sechseckigen Raster, in einem solchen Abstand ausgerichtet sind, dass die Noppen 2 der zu verbindenden Teile beim Zusammenfügen ineinander gleiten und sich miteinander verklemmen oder verhaken, wobei die einzelnen Noppen 2 im unteren Teil geometrisch ineinander übergehen, sich so miteinander verbinden und damit keine Grundplatte benötigen, auf der die einzelnen Noppen aufgesetzt sind..

Dazu werden zwei flächige beidseitig mit dieser noppen- bzw. waffelartig strukturierten Geometrie versehen, in dieser Form geprägt oder anderweitig hergestellt. Beim Zusammendrücken zweier dieser Elemente rasten die Strukturen ineinander und können Kräfte sowohl in vertikale, als auch in horizontale Richtung übertragen. Unter Verformung (Schälbewegung) des Materials lässt sich die Verbindung durch Auseinanderziehen wieder lösen. Damit kann das erfindungsgemäße Verbindungssystem,
in einigen Fällen besser, Aufgaben übernehmen, die bisher vorzugsweise von Klettverschlüssen in diversen Ausführungen erfüllt wurden.

Grundlage des Systems ist die flächige Anordnung von leicht hinterschnittenen Rotationskörpern in rechteckigem oder sechseckigem Raster. Dadurch bildet sich ein waffelartiger Grundkörper mit noppenförmigen Erhebungen, die sich beim Aufeinanderdrücken zweier derartig gestalteter Elemente formschlüssig miteinander verbinden.
Die Bezeichnung "waffelförmig" oder "waffelartig" beschreibt im Sinne der Erfindung eine an die Oberfläche eines traditionellen Waffeleisens oder an die zur Versteifung von Blechen verwendeten Waffelprägung angelehnte Struktur aus einer regelmäßigen, flächigen Reihung von hohlen Dreiecks- oder Viereckspyramiden ohne Grundfläche 14 und mit gleichen Abmessungen, bei der an allen Basiskanten 14.3 einer mit der Spitze nach oben 14.1 ausgerichteten Pyramide drei bzw. vier mit der Spitze nach unten 14.2 gedrehte Pyramiden mit einer ihrer Basiskante 14.3 anschließen und an allen Ecken 14.4 drei bzw. vier mit der Spitze nach oben 14.1 orientierte Pyramiden mit einer Ecke ihrer Basis 14.4 anschließen (Figuren 61 / 62).

Die Geometrie sorgt, im Gegensatz z.B. zum METAKLETT System, dafür, dass beide Teile sich selbst positionierend ineinandergreifen.
Im Gegensatz zu anderen vergleichbaren Verbindungssystemen ist kein anders gestaltetes Gegenstück erforderlich, wie Klettband und Schlaufenband oder Laschenband und Ösenband).

Die Unteransprüche 2 bis 9 geben weitere vorteilhafte Ausgestaltungen der Erfindung gemäß Anspruch 1 wieder, ohne diese zu begrenzen.

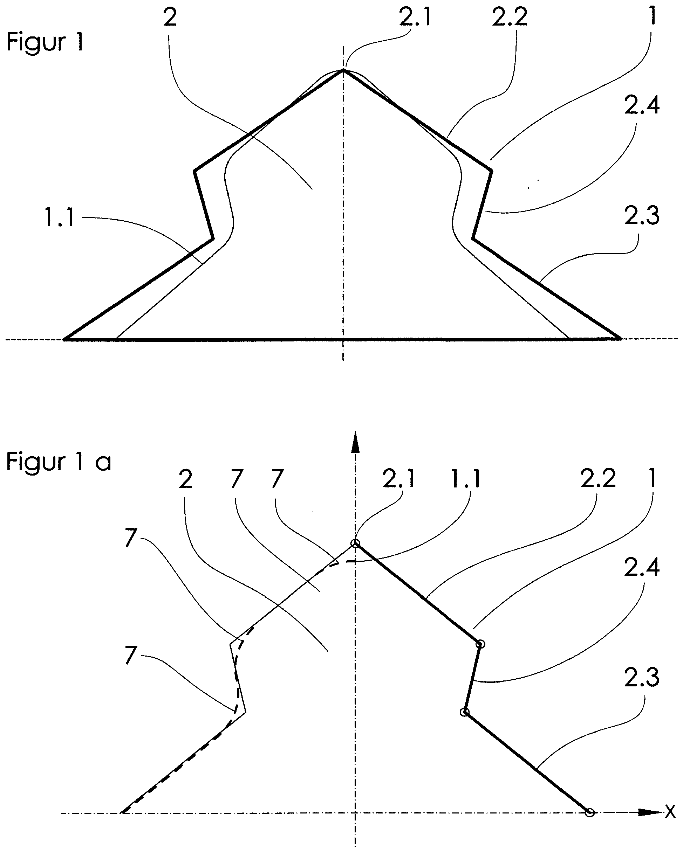

Die Form der Rotationskörper variiert, je nach Anforderung von einer gerundeten zu einer scharfkantigen Form. Figur 1 stellt das Spektrum der Grundformen dar. Aus der Grundform werden die Rotationskörper - wieder je nach Anforderung - entweder 3-fach segmentiert 2.9 (Figur 5 bis 10) oder 4fach segmentiert 2.10 (Figur 11 bis 13).

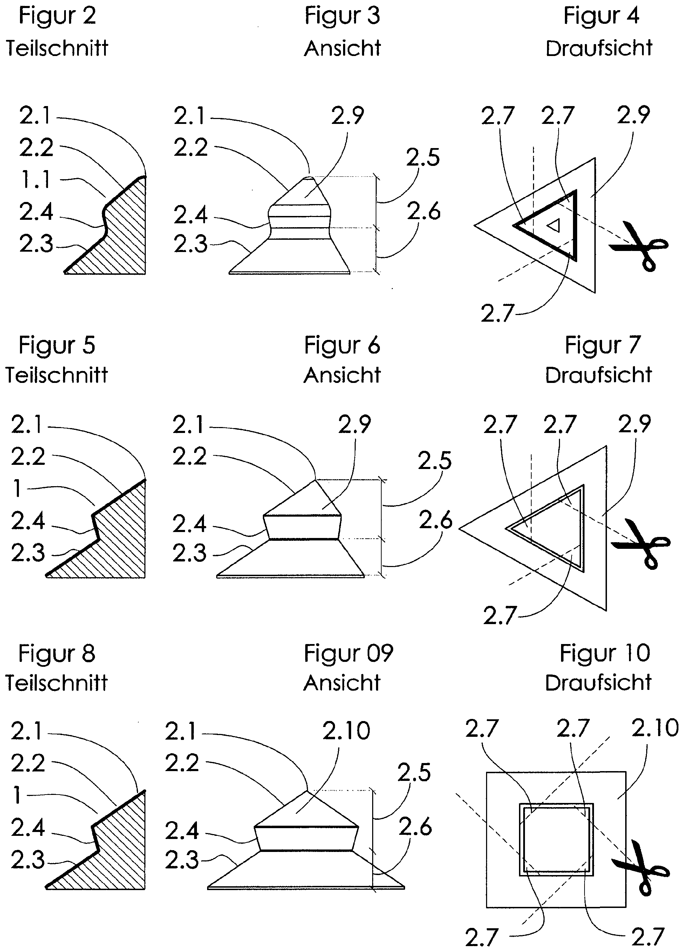

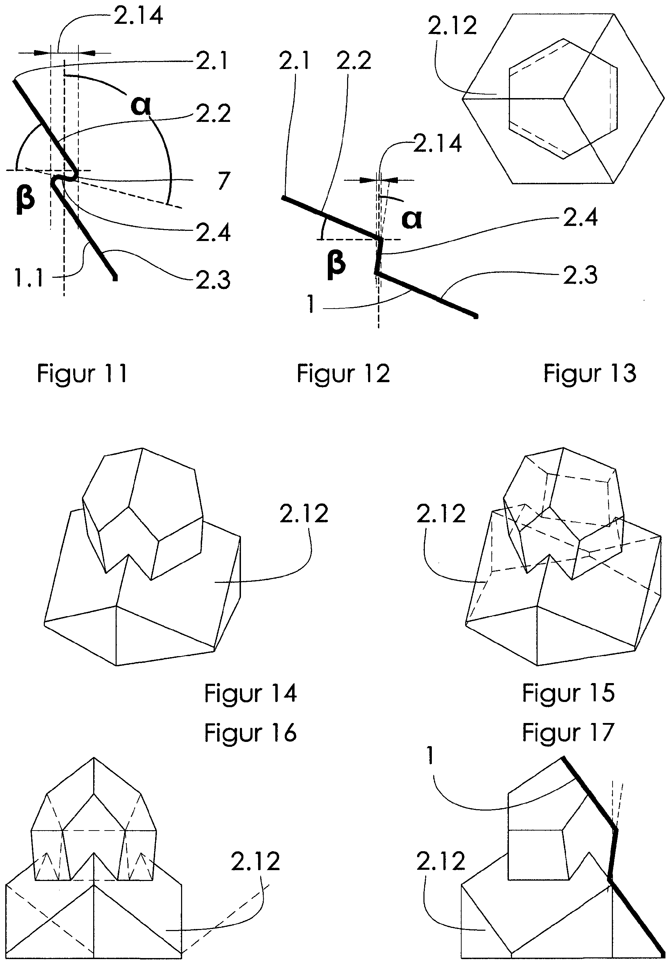

Der obere Teil 2.5 der segmentierten Grundkörper 2.9 und 2.10 wird, wie in den Figuren 7,10,13 dargestellt, zu einer Sechs- bzw. Achteckform beschnitten 2.7.

Damit ergeben sich folgende Grundformen:

### Figur 20 bis 26:

Eine unter 60° Winkeln strukturierte Grundform "B", anzuordnen im Sechseckraster.

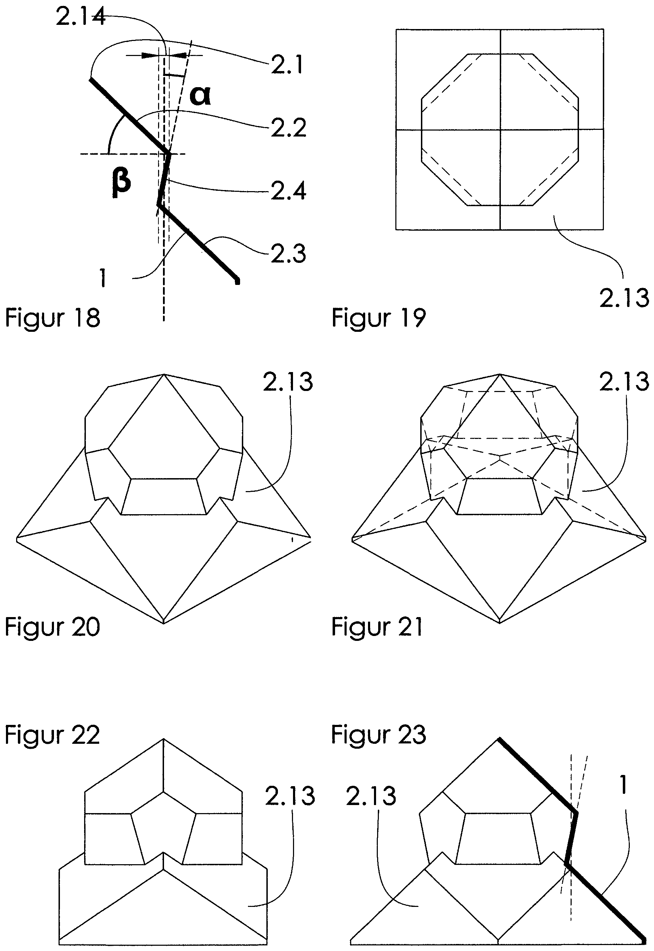

Sie ist über die Modifizierung der Winkel (Figur 20, 21) flexibel an die Anforderungen der Kraftübertragung anpassbar. Damit lassen sich die erforderliche Kraft zum Einrasten oder Lösen der Verbindung ebenso konfigurieren, wie die Leichtigkeit des Ineinandergleitens der Noppen. So führt eine Vergrößerung des Winkels α zu einer Erhöhung der zum Lösen erforderlichen Kraft. Beträgt sein Wert mehr als 90°, rastet die Verbindung permanent ein (Figur 20). Umso größer dagegen Winkel β ist, umso leichter lässt sich die Verbindung schließen. Eine Abrundung 7 der Kante am Ursprung des Winkels α verringert die zum Schließen und Lösen erforderlichen Kräfte. Die Anpassung auf Materialeigenschaften und Anwendungsfall ist so besonders gut möglich.

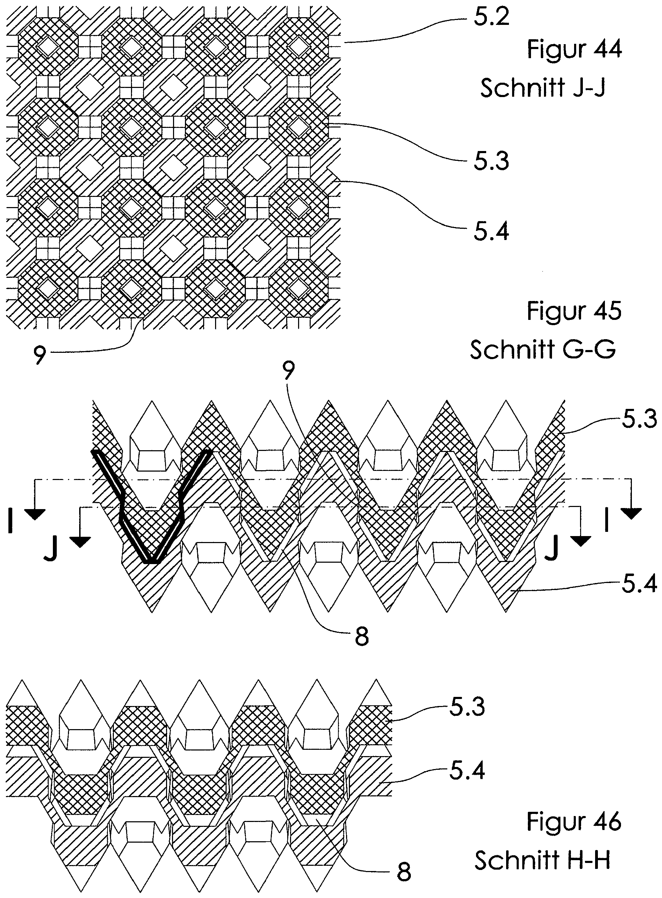

Die Eintragung von horizontalen Kräften 6 erfolgt entweder senkrecht auf die lastableitende Fläche oder führt zur Verkeilung der Verbindung (Figur 44).

### Figur 27 bis 32:

Eine unter 90° Winkeln strukturierte Grundform "**C**", anzuordnen im Rechteckraster.

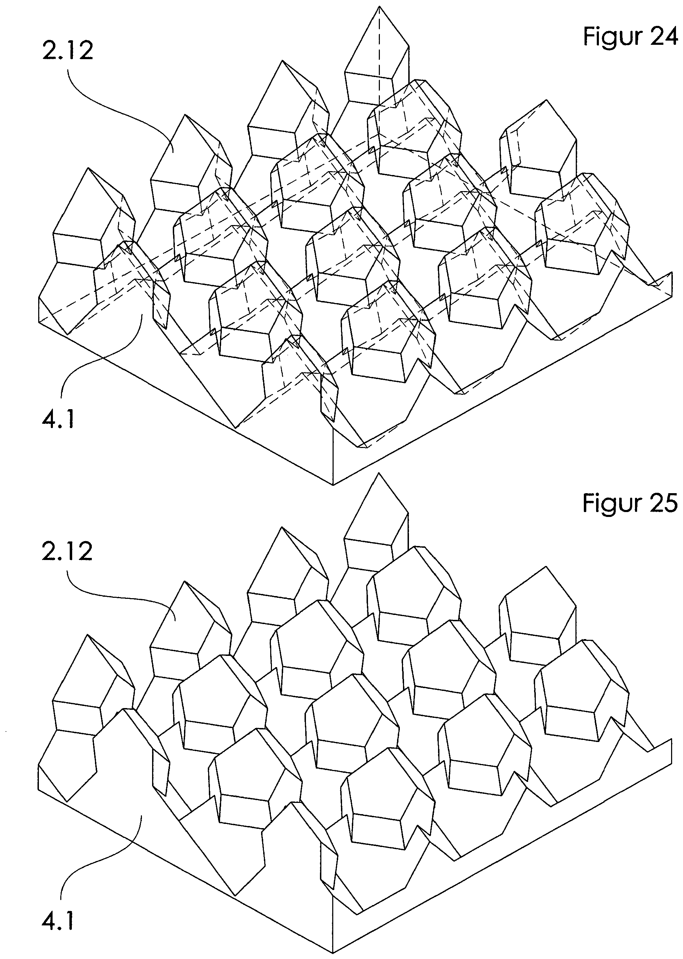

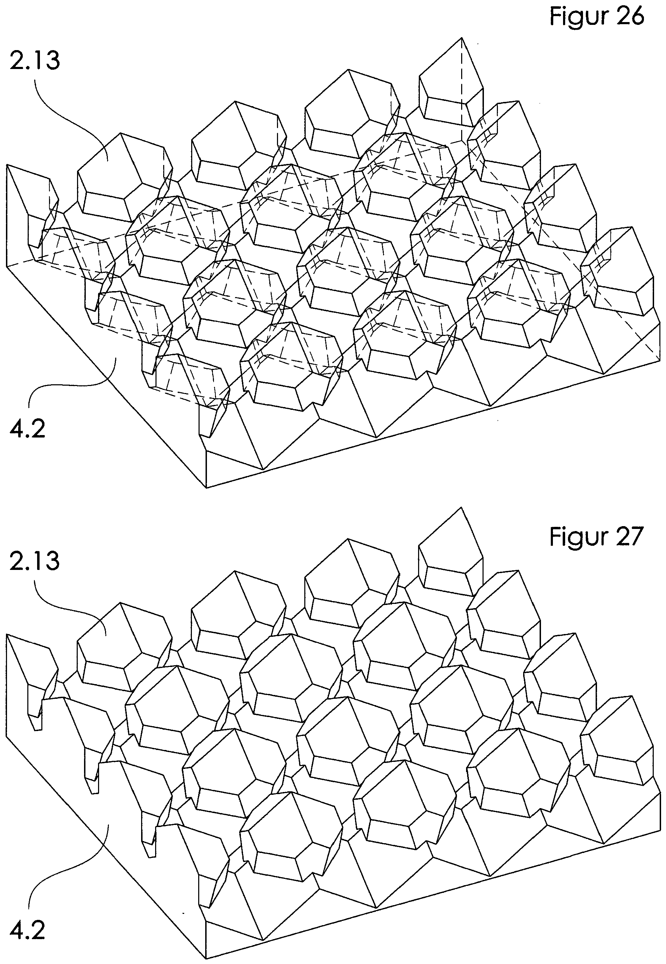

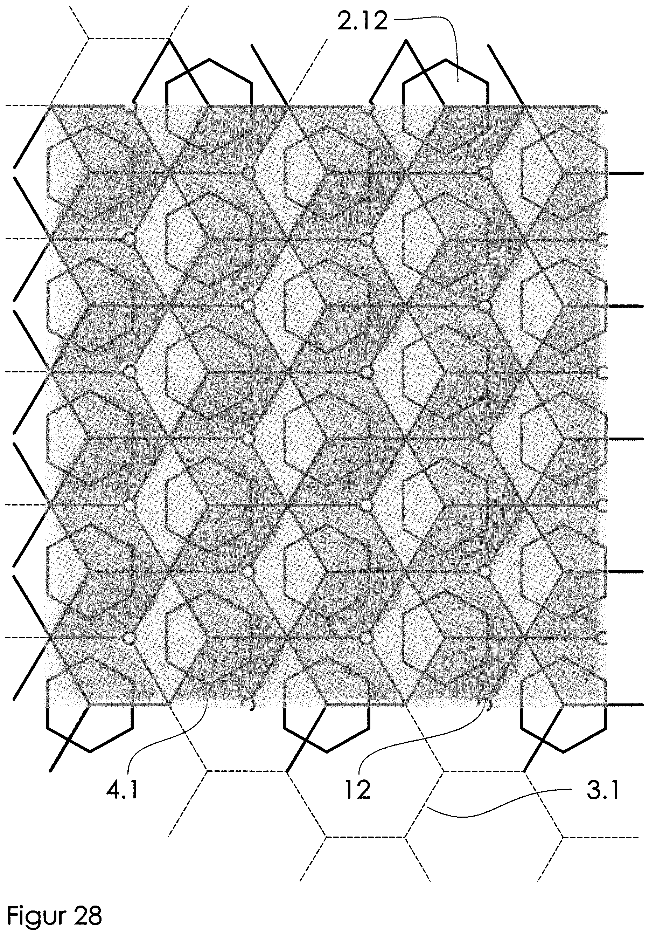

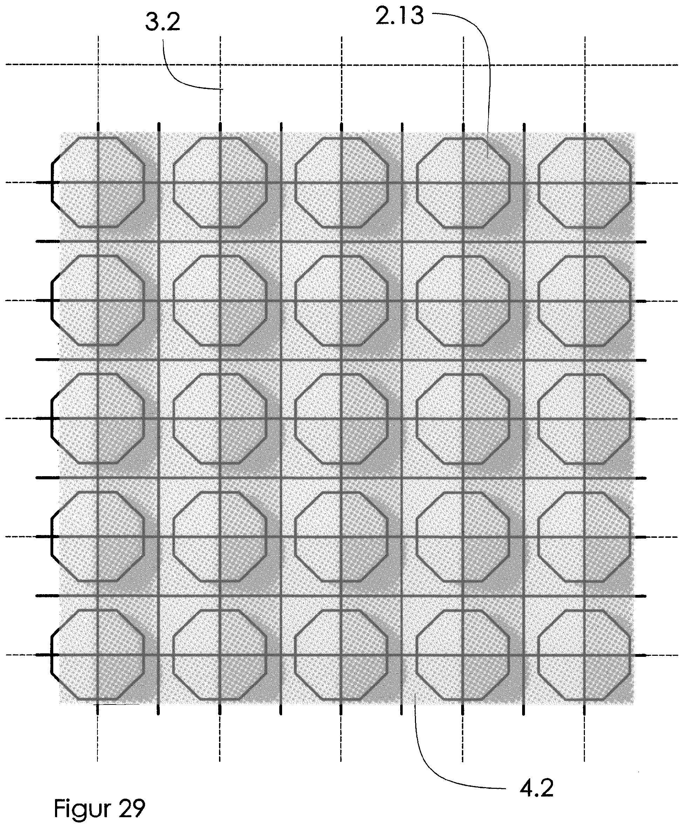

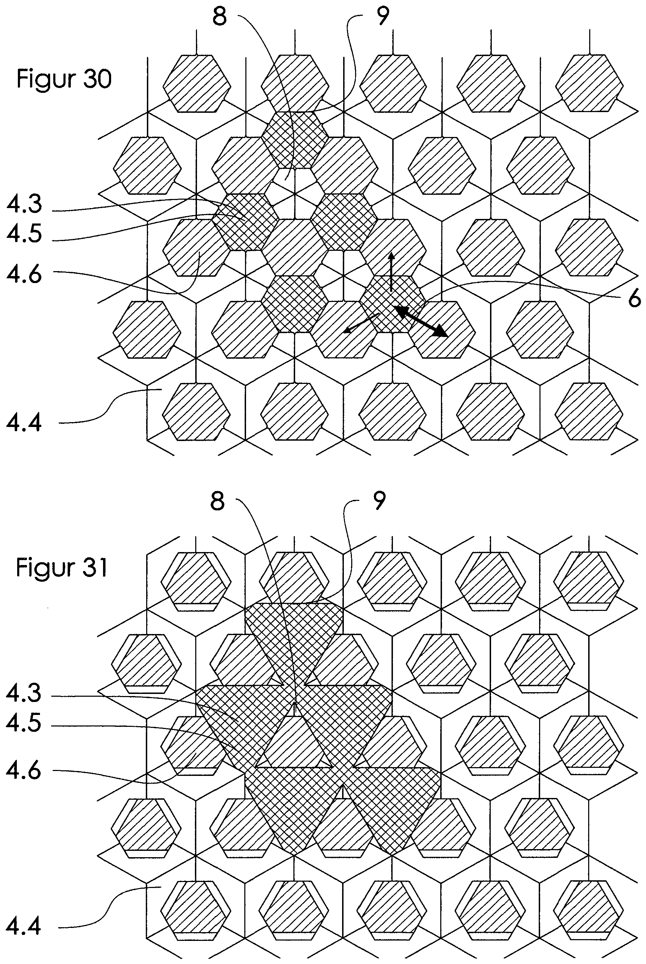

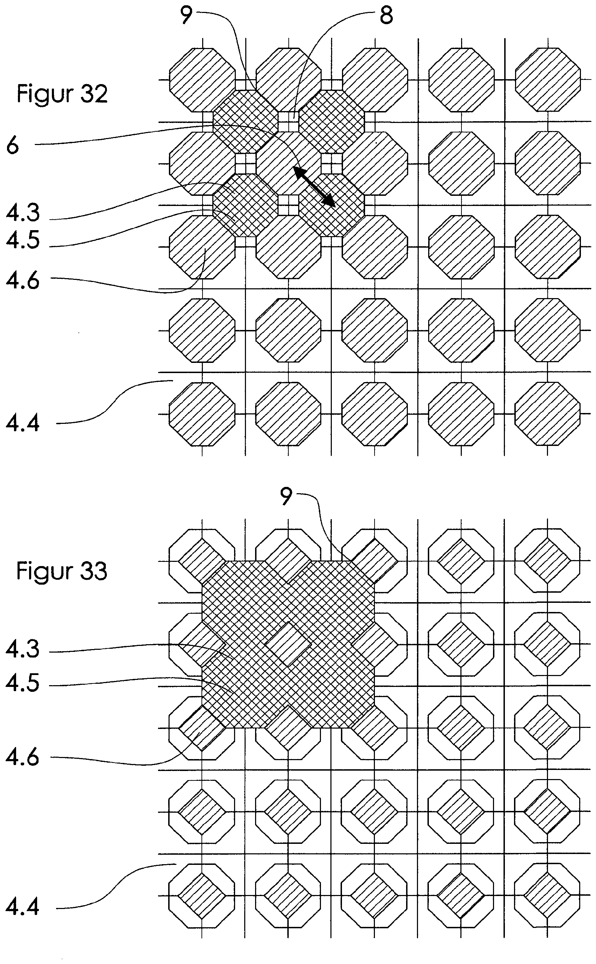

Im Unterschied zu der in Figur 20 bis 26 dargestellten Grundform können hier horizontale Kräfte 6 durchgehend senkrecht auf die kraftübertragenden Flächen geleitet werden (Figur 46).

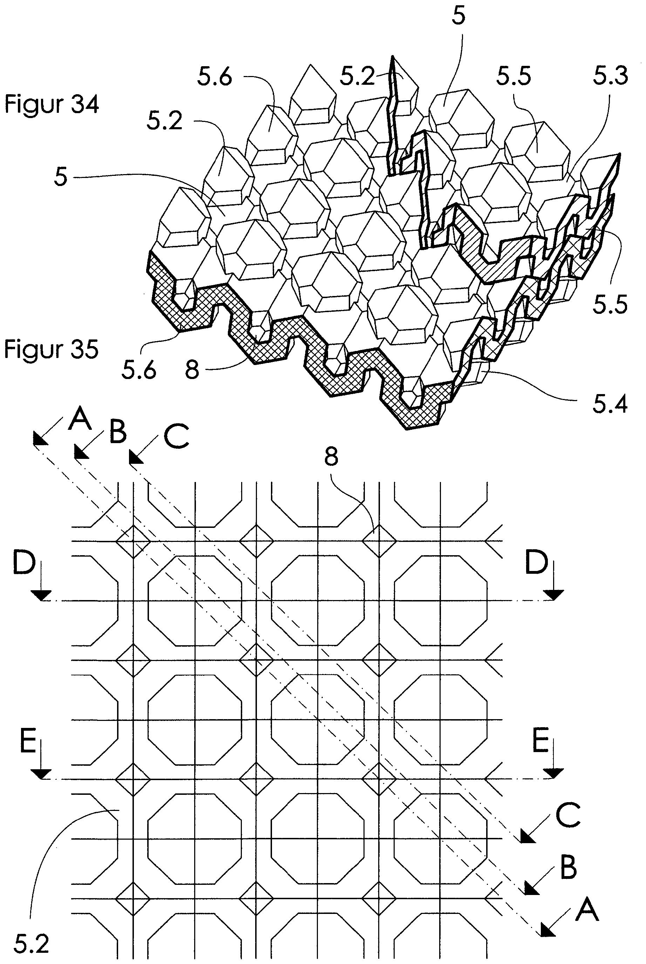

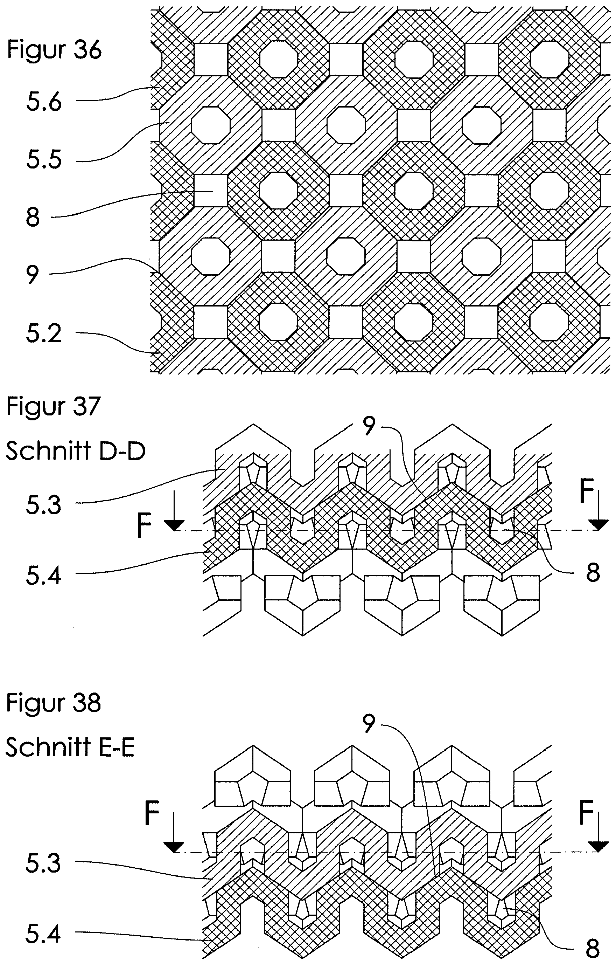

Die Zusammenfassung der jeweiligen Grundformen zu einer Fläche ist für Grundform "**B**" in den Figuren 35, 36 und für Grundform "**C**" in den Figuren 37, 38 beispielhaft isometrisch dargestellt.

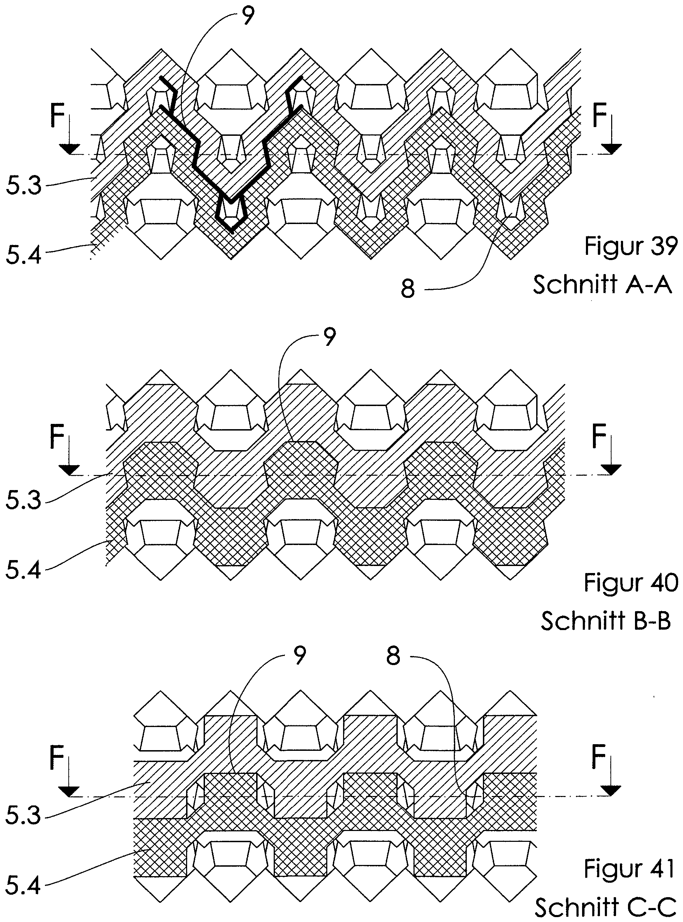

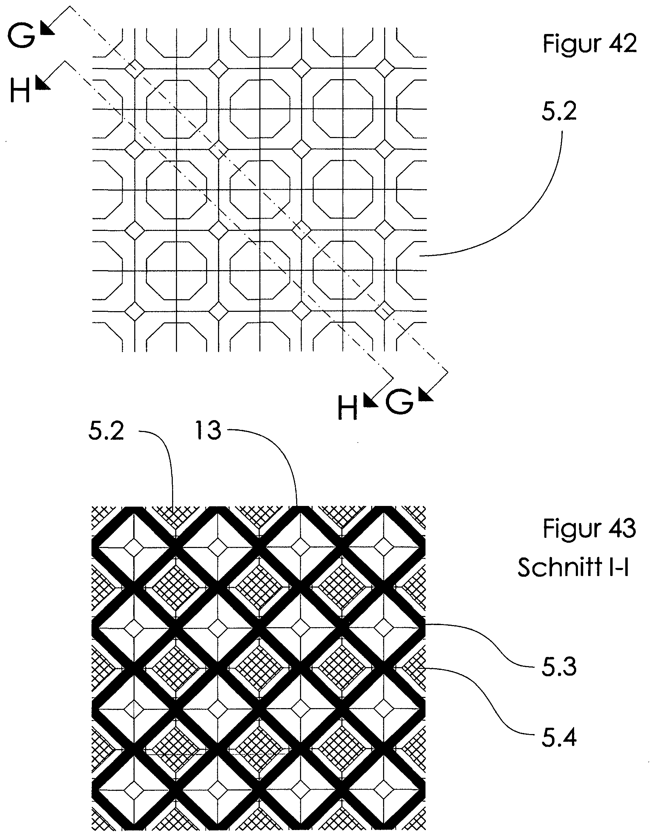

Figur 40 zeigt die gebildete Noppenfläche für Grundform "**C**" und Figur 41 für Grundform "**C**" in der Draufsicht.

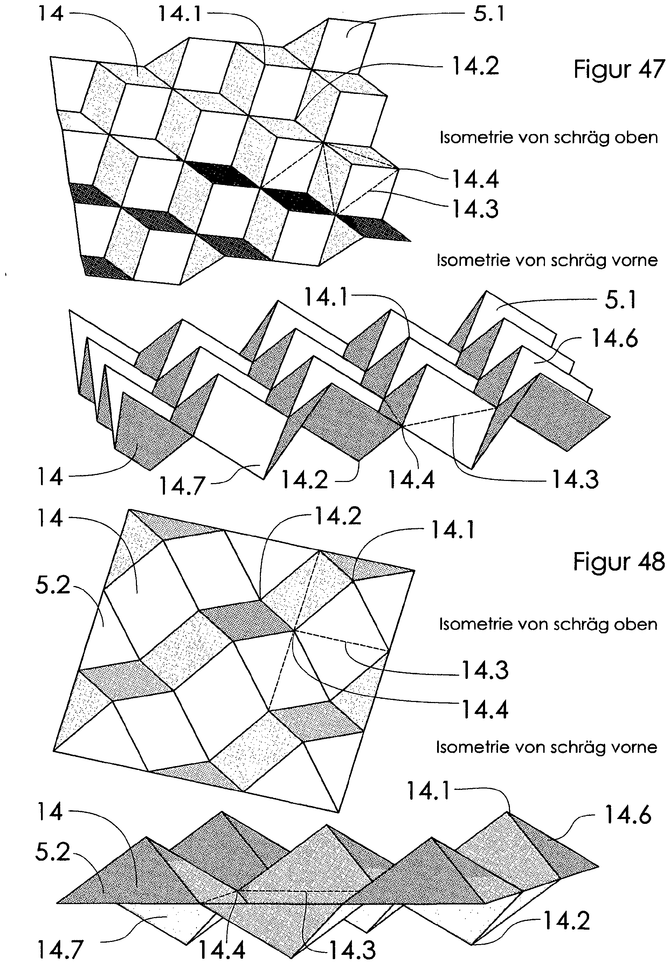

In den Figuren 44, 45 (Grundform "**B**") und den Figuren 46, 47 (Grundform "**C**") sind horizontale Schnitte durch die Verbindungen geführt. Das aufgesetzte Teil 4.3 ist mit Kreuzschraffur versehen. Die Doppelpfeile stellen die eingeleiteten Horizontalkräfte 6 dar, die dünneren Pfeile die Kraftverteilung für die Bauform "**B**".

Auch ist anhand dieser Schnittdarstellungen deutlich zu erkennen, dass die Verbindung dicht schließt, aber gleichzeitig Hohlräume 8 vorhanden sind, die verdrängte Luft und Verunreinigungs-Partikel aufnehmen können. Damit besteht die Möglichkeit, mittels der erfindungsgemäßen Verbindung zwei Elemente dicht miteinander verbinden zu können.
Eine den Raum zwischen beiden Elementen vollständig ausfüllende Verbindung würde sich nur gegen den Widerstand der vollständig heraus zu pressenden Luft schließen lassen.
Die Bezeichnung "dicht" beschreibt im Sinne der Erfindung insbesondere den geschlossenen Zustand der Verbindung, bei der sich die Oberflächen der Verbindungselemente, durchgehend eine geschlossene Kontur bildend, berühren und somit eine dichtschließende Verbindung herstellen.

Je nach Anwendungsfall können die Noppenmatten zusätzlich Öffnungen zum Austreten der Luft 12 erhalten, die dadurch gebildet werden können, dass die einzelnen Noppen am Fußpunkt nicht vollständig ineinander übergehen (Figur 40).

Ebenso muss für die praktische Anwendung beachtet werden, dass sich in den Verbindungsflächen Schmutzpartikel befinden können. Auch für diese müssen Hohlräume verbleiben, in den sie beim Zusammendrücken geschoben werden können.

Indem die oben beschriebene strukturierte Oberfläche senkrecht, so dass an jeder Stelle zwischen der Ursprungsoberfläche und ihrer Kopie ein Abstand besteht, nach unten dupliziert und zwischen Ursprungsoberfläche und ihrer Kopie geometrisch ein Volumenkörper extrudiert wird, entsteht das fertige erfindungsgemäße Verbindungselement, dessen Ober- und Unterseite über dieselben gleichstrukturierten Verbindungsflächen verfügen.

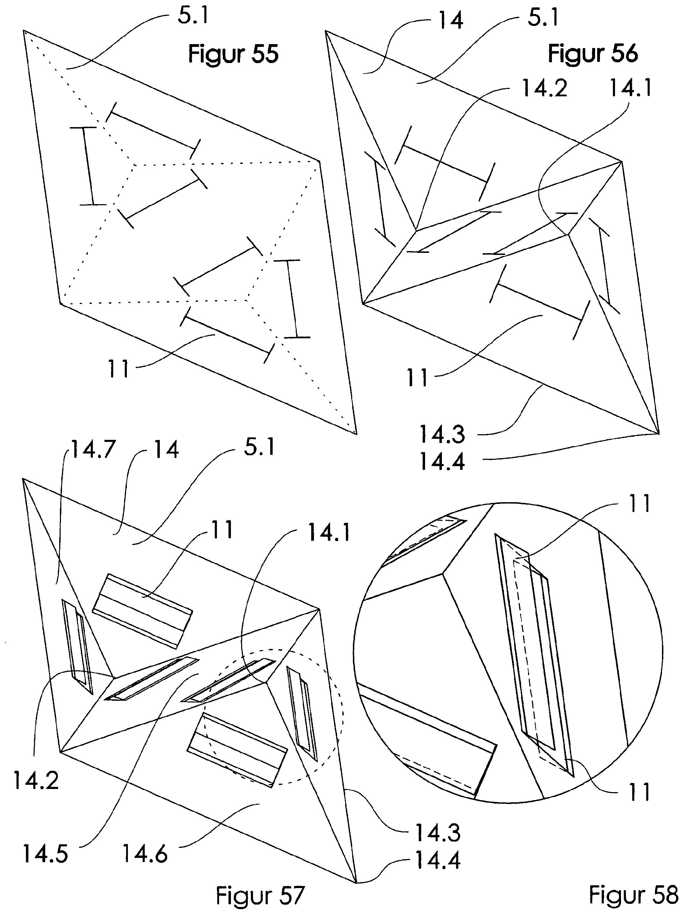

Die Zugfestigkeit des Rastemoppenbandes oder der Rastemoppenfläche ist durch seine geometrische Struktur gewährleistet. Unter Verwendung der Grundform "**C**" werden Zugkräfte über ein rechtwinkliges Gitter 13 (Figur 57), bei Verwendung der Grundform "**B**" über ein besonders formstabiles Dreiecks-Gitter 13 (Figur 66) übertragen.

Die Herstellung der hinterschnittenen Noppenformen, z.B. im Spritzgussverfahren, setzt ein komprimierbares Material voraus.
Für Anwendungen, die andere Materialien, wie z.B. Hart-Kunststoff oder Stahlblech benötigen, oder aus technologischen Erfordernissen lässt sich die erfindungsgemäße Geometrie, wie in den Figuren 63 bis 66 dargestellt, auch durch Aufsatzteile 10 (Figur 65) herstellen, welche auf die Spitzen 14.1/14.2 (Figur 61, 62) des "waffelförmigen", hinterschneidungsfreien Grundkörpers 14 (Figuren 61, 62) aufgesetzt werden.

Speziell für eine Fertigung aus Metall eignet sich die in den Figuren 67 bis 72 dargestellte Variante zur Herstellung der erfindungsgemäßen Geometrie.
Die für die Verbindung erforderliche Hinterschneidung wird in diesem Fall durch das Aufbiegen von gestanzten Laschen 11 hergestellt. Gut erkennbar ist in Figur 67 die "Waffelform" 14 des Bleches, die für ein selbstjustierendes Ineinandergleiten beider Elemente sorgt. Figur 68 stellt in der Schnittdarstellung das Ineinandergreifen der beiden geprägten Bleche dar. Je nachdem, wie weit die Laschen 11 heraus gebogen werden und je nach Materialdicke, verankern sich beide Teile über die Stirnseiten der Laschen 11 (wie in Figur 68 dargestellt) oder greifen direkt ineinander.

Im ersten Fall bleibt die Verbindung lösbar, im Zweiten ist sie permanent.
Die Figuren 69 bis 71 stellen mögliche Fertigungsschritte (Ausschnitt aus der Fläche) isometrisch dar. Im ersten Schritt werden die Laschen 11 ausgestanzt, danach wird das Blech in "Waffelform" 14 geprägt, abschließend werden die vorgestanzten Laschen 11 herausgebogen.

In Figur 72 sind die Laschen vergrößert dargestellt.

Mit der Erfindung wird ein Verbindungssystem geschaffen, dass sich durch einfachen Herstellung und hohe Flexibilität auszeichnet.

Gegenüber konventionellen Klettsystemen ergeben sich wesentliche Vorteile: Das erfindungsgemäße System lässt sich auf Grund der, soweit das System nicht als permanenter Verschluss konfiguriert ist, nur flachen Hinterschneidungen gut reinigen. Flusen und andere Schmutzpartikel können sich nicht an der Noppenfläche verhaken. In der Auslegung für permanente Verbindungen mit starker Hinterschneidung ist dieser Aspekt weniger von Bedeutung, da nur von einer einmaligen Betätigung auszugehen ist und so eine Abnahme der Haftfähigkeit durch Verschmutzung nicht von Bedeutung ist.

Besonders abgerundete und flache Ausführungen der beiden Grundformen eignen sich für Anwendungen mit hohen hygienischen Ansprüchen, wie in der Medizin.

Das erfindungsgemäße Befestigungssystem, außer der Ausführung gemäß Figur 67 bis 72 für Metallbleche und Hartkunststoffe und eingeschränkt in der Ausführung als Permanentverschluss, kann sich mit praktisch keiner anderen Oberfläche unkontrolliert verhaken. Das vermeidet Beschädigungen besonders an Textilien und verhindert das bei Klettverschlüsse lästige Verhaken an den falschen Oberflächen.

Das erfindungsgemäße Verbindungssystem lässt sich durch Materialwahl, Konfiguration der Winkel der Geometrie und die Wahl zwischen Rechteck- und Sechseckraster so auf die aufzunehmenden Kräfte einstellen, dass sowohl elastische als auch starre Verbindungen herstellbar sind.

Die Aufgabe der Erfindung wird außerdem durch ein Verfahren mit den Merkmalen des Anspruchs 11 gelöst.

Für die Verbindung von Werkzeugen mit Werkzeugträgern lässt sich so die Effektivität der Kraftübertragung gegenüber herkömmlichen Klettsystemen verbessern. Bei der Verwendung des erfindungsgemäßen Systems für die weitverbreiteten Verbindung von Schleifgewebe mit Werkzeugträgern kann sich das Schleifmittel nur unter Zerstörung eines großen Teils der Verbindungsnoppen vom Werkzeugträger lösen und hat praktisch keinen Schlupf.

Das erfindungsgemäße Verbindungssystem eignet sich gut für dem Wetter ausgesetzten Bekleidung wie Schuhe und Wetterjacken, da es, aus gummiartigem Material oder Kunststoff gefertigt, keine Nässe aufnimmt.
Darüber hinaus lassen sich dichte Verschlüsse realisieren, was mit herkömmlichen Klettverschlüssen nicht möglich ist.

Das erfindungsgemäße Verbindungssystem kann hinsichtlich der aufnehmbaren Kräfte eindeutig definiert werden.

Durch das vollständige Ineinandergreifen der sich verbindenden Elemente werden Scherkräfte dicht an der Achse der Verbindung eingeleitet, was die Kraftübertragung optimiert.
Besonders optimal sind in diesem Sinne die Ausführung für Bleche (Figur 67 bis 72) oder die auf der Grundform "**C**" basierenden Ausführungen. Damit kann das System auch zur Verbindung tragender Bauelemente verwendet werden.

Das erfindungsgemäße Verbindungssystem lässt sich in beliebigen Dimensionen herstellen.

Das erfindungsgemäße Verbindungssystem kann aus einer Vielzahl von Materialien hergestellt werden. Damit sind auch Eigenschaften wie unbrennbar, lösungsmittelbeständig, dehnbar, transparent u.a. erreichbar.
Das erfindungsgemäße Verbindungssystem kann auf einfachste Weise z.B. im Spritzgussverfahren oder in der Ausführung gemäß Figur 67 bis 72 durch Stanzen und Prägen aus homogenen Materialen hergestellt werden.

Das erfindungsgemäße Verbindungssystem benötigt kein anders gestaltetes "Gegenstück" wie beim klassischen Klettverschluss (Hakenband und Flauschband) oder beim METAKLETT-System (Hakenband und Ösenband).

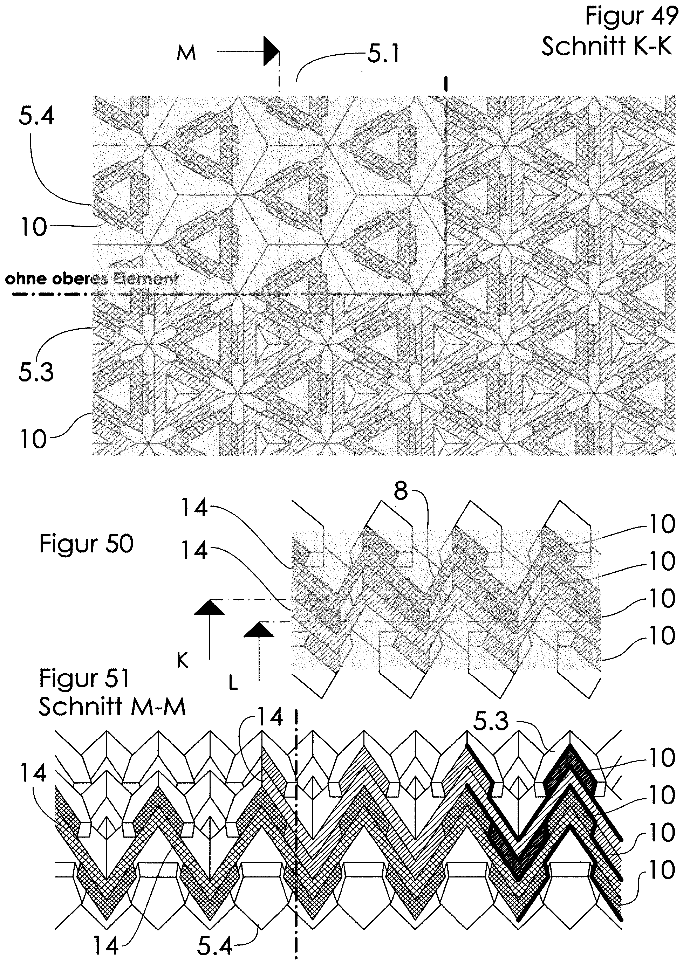

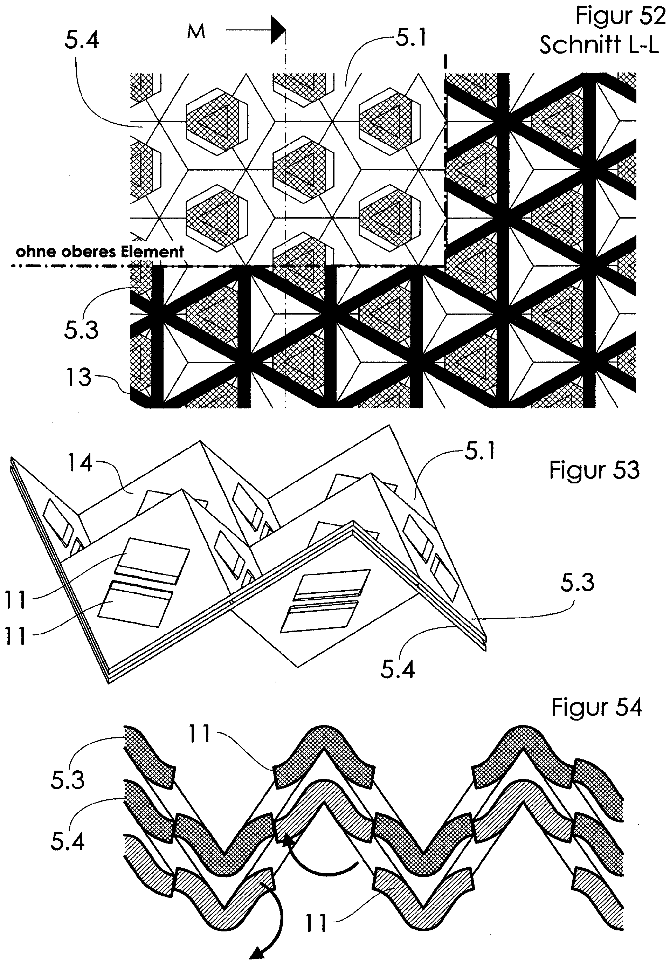

Da beidseitig verwendbar gemäß Figur 48 bis 72, kann es, als "endlos"- Band gefertigt, beliebig abgelängt und z.B. zur Verbindung von Kabeln, Leitungen u.ä. oder zum Verpacken verwendet werden.

Als Matte aus Schaumstoffen gefertigt, steht eine universelle Schutzmatte (Schutz vor Stößen, Erschütterungen) oder Isolierbahn (Schall-, Wärmeisolierung) zur Verfügung, deren Wirkung sich noch durch die sich zwischen den inneren Noppen und dem zu isolierenden Material bildende Luftschicht verbessert und die sich ohne Hilfsmittel an den überlappenden Enden verbinden lässt.

Drainagematten zur Bauwerksabdichtung können, mit der Geometrie der erfindungsgemäßen Verbindung versehen, die Funktion einer gängigen Noppenbahn erfüllen und darüber hinaus ohne weitere Hilfsmittel an den Stößen dicht und stabil verbunden werden.

Das METAKLETT-System hat gegenüber dem klassischen Klettsystem den Vorteil einer deutlich höheren Stabilität und Widerstandsfähigkeit gegen äußere Einflüsse. Auch das erfindungsgemäße Verbindungssystem verfügt, z.B. in der Ausführung gemäß Figur 67 bis 72 über diese Eigenschaften.
Darüber hinaus muss das erfindungsgemäße System nicht vor dem Zusammendrücken exakt in Position gebracht werden, sondern beide Teile gleiten über die Schrägen des "waffelförmigen" Grundkörpers in die zum Einrasten erforderliche Stellung.
Das METAKLETT-System weist zahlreiche hervorstehende scharfe Kanten auf, die eine Verletzungsgefahr darstellen.
Die vorstehenden Laschen des erfindungsgemäßen Systems, Ausführung gemäß Figur 67 bis 72, befinden sich in den "Senken" des Verbindungssystems und stellen somit kaum eine Verletzungsgefahr dar. Eine leichte Ausrundung der Spitzen verbessert dabei die Sicherheit und beeinträchtigt die Funktion nicht. Das erfindungsgemäße Verbindungssystem kann sowohl zur Verbindung derselben als auch verschiedener Materialien verwendet werden. Das erweist sich als vorteilhaft, wenn z.B. eine Verschleißelement auf einen Werkzeugträger aufgesetzt werden soll. Der Werkzeugträger kann einen Metallverbinder erhalten, das Verschleißmaterial einen solchen aus Kunststoff. Auch Sollbruchstellen können so auf ein Element beschränkt werden.

Das erfindungsgemäße Verbindungssystem lässt sich sowohl als wieder lösbare oder als permanente Verbindung konfigurieren. Bei einer stärkeren Hinterschneidung der Noppen (Figur 20) oder stärkeren Aufbiegung der Laschen (Figur 68) lässt sich die_Verbindung nach dem Einrasten nur noch durch Zerstörung des Materials lösen.

### LISTE DER BEZUGSZEICHEN

- 1.: Geometrie Polygon
1.1. Polygon, abgerundet
- 2.: Geometrie Noppen
2.1. Spitze (auch abgerundete Spitze)
2.2. obere Gleitfläche
2.3. untere Gleitfläche
2.4. Hinterscheidung
2.5. oberer Teil des Rotationskörpers
2.6. unterer Teil des Rotationskörpers
2.7. zu beschneidende Kante des oberen Noppenteils
2.8. Rotationskörper, unsegmentiert
2.9. Rotationskörper, dreifach segmentiert
2.10. Rotationskörper, vierfach segmentiert
2.11. Rotationskörper, unsegmentiert, unterer Teil an Raster angepasst
2.12. Rotationskörper, dreifach segmentiert, unterer Teil des Rotationskörpers an Raster angepasst
2.13. Rotationskörper, vierfach segmentiert, unterer Teil des Rotationskörpers an Raster angepasst
2.14. Maß der Hinterschneidung
- 3.: Raster
3.1. Sechseckraster
3.2. Rechteckraster
- 4.: Strukturierte Oberfläche
4.1. im Sechseckraster angeordnet
4.2. im Rechteckraster angeordnet
4.3. Oberteil
4.4. Unterteil
4.5. Noppen des Oberteils
4.6. Noppen des Unterteils
- 5.: vollständiges Verbindungselement
5.1. im Sechseckraster angeordnet
5.2. im Rechteckraster angeordnet
5.3. Oberteil
5.4. Unterteil
5.5. Noppen des Oberteils
5.6. Noppen des Unterteils
- 6.: Vektoren der Krafteintragung
- 7.: Abrundung
- 8.: Hohlraum
- 9.: Kontaktfläche
- 10.: aufgesetztes, angefügtes Teil
- 11.: die die Hinterschneidung bildende Lasche
- 12.: Luftaustrittsöffnung
- 13.: Gitterstruktur des horizontal geschnittenen Verbindungselementes
- 14.: waffelförmige Primär-Struktur aus hohlen, unten offenen Pyramidenformen
14.1. Spitze oben
14.2. Spitze unten
14.3. Basiskante
14.4. Ecke der Basis
14.5. Gleitfläche
14.6. obere Noppe
14.7. untere Noppe

## Patentansprüche

1. Noppenrasterverbindungssystem, zumindest bestehend aus zwei gleichartigen Verbindungselementen mit strukturierten Flächen, welche beidseitig über eine noppenartige Ausformung der Oberfläche verfügen, deren Noppen (2), (14.6 und 14.7) eine selbstjustierende, formschlüssige Verbindung zwischen den Verbindungselementen des Noppenrasterverbindungssystems beim Zusammendrücken der Verbindungselemente herstellen, wobei die Grundkörper der Noppen (2) (14.6 und 14.7) als dreifach oder vierfach segmentierte Rotationskörper ausgebildet sind, die Rotationskörper zumindest über eine Spitze (2.1), (14.1), konisch verlaufende Gleitflächen (2.2 und 2.3), (14.5) und Hinterscheidungen (2.4), (11) verfügen, und in einem rechteckigen oder sechseckigen Raster, in einem solchen Abstand ausgerichtet sind, dass die Noppen (2), (14.6 und 14.7) der zu verbindenden Teile beim Zusammenfügen ineinander gleiten und sich miteinander verklemmen oder verhaken, wobei die einzelnen Noppen (2), (14.6 und 14.7) im der Spitze abgewandten Teil, geometrisch ineinander übergehen, **dadurch gekennzeichnet, dass** eine beidseitige Verwendbarkeit hergestellt wird, indem das Verbindungselement (5) sowohl an der Oberseite, als auch an der Unterseite über Noppenstruktur verfügt, und indem die aus drei- oder vierfach segmentierten Rotationskörpern gebildete, noppenartig strukturierte Oberfläche senkrecht nach unten dupliziert wird, so dass an jeder Stelle zwischen der Ursprungsoberfläche und ihrer Kopie ein Abstand besteht und zwischen diesen beiden Oberflächen ein Volumenkörper geometrisch extrudiert wird, wobei ein horizontaler Schnitt durch den Schwerpunkt des so gebildeten Verbindungselements stets zu einem durchgehenden Dreiecks- oder Rechteckgitter (13) führt und die Unterseite der Verbindungselemente, analog der Oberseite der Verbindungselemente ausgeformt ist, und somit Unterseite und Oberseite gesonderte, gleichstrukturierte Verbindungsflächen sind.

2. Noppenrasterverbindungssystem gemäß Anspruch 1, **dadurch gekennzeichnet, dass** das die dreifach oder vierfach segmentierten Rotationskörper bildende Polygon (1) an der Spitze (2.1) dieser Körper beginnt, von dort in einem Winkel α nach rechts unten verläuft und die erste Gleitfläche bildet, dann in einem Winkel β nach links unten, nach links oder nach links oben verläuft und die Hinterschneidung (2.4) bildet, dann im Winkel α nach rechts unten verläuft und die zweite Gleitfläche (2.3) bildet (Figuren 14,20,21,27).

3. Noppenrasterverbindungssystem gemäß Anspruch 1, **dadurch gekennzeichnet, dass** die Oberfläche der dreifach segmentierten Rotationskörper durch vertikales Drehen und dabei Kopieren des Polygons (1) um eine senkrechte Achse durch den Anfangspunkt des Polygons (1) um 360° in drei Winkelschritten von je 120° gebildet wird, wobei jedes dadurch neu gebildete Polygon (1) mit dem ihm vorhergehenden Polygon (1) durch geometrische Extrusion zu einer Fläche verbunden wird und die Kanten des oberen Teils der dreifach segmentierten Rotationskörper, die erste/obere Gleitfläche und die Hinterschneidung umfassend, radialsymmetrisch so beschnitten werden, das dieser Teil der Noppen (2) in der Draufsicht ein Sechseck bildet.

4. Noppenrasterverbindungssystem gemäß Anspruch 1, **dadurch gekennzeichnet, dass** die Oberfläche der vierfach segmentierten Rotationskörper durch vertikales Drehen und dabei Kopieren des Polygons (1) um eine senkrechte Achse durch den Anfangspunkt des Polygons (1) um 360° in vier Winkelschritten von je 90° gebildet wird, wobei jedes dadurch neu gebildete Polygon (1) mit dem ihm vorhergehenden Polygon (1) durch geometrische Extrusion zu einer Fläche verbunden wird und die Kanten des oberen Teils der vierfach segmentierten Rotationskörper, die erste/obere Gleitfläche und die Hinterschneidung umfassend, radialsymmetrisch so beschnitten werden, das dieser Teil der Noppen in der Draufsicht ein Achteck bildet.

5. Noppenrasterverbindungssystem gemäß Anspruch 1, **dadurch gekennzeichnet, dass** die Hinterschneidungen, durch aufgebogene Laschen (11) in durchgehenden Gleitflächen (14.5) hergestellt werden können.

6. Noppenrasterverbindungssystem gemäß Anspruch 1, **dadurch gekennzeichnet, dass** dieses ein formschlüssiges und permanent schließendes unlösbares Noppenrasterverbindungssystem oder dieses ein formschlüssiges und wieder lösbares Noppenrasterverbindungssystem ist.

7. Noppenrasterverbindungssystem gemäß Anspruch 1, **dadurch gekennzeichnet, dass** die beiden im Eingriff befindlichen gleichartig strukturierten Flächen sich an den Kontaktflächen (9) vollflächig berühren und sich zwischen den beiden im Eingriff befindlichen Flächen (Kontaktflächen) am Raster ausgerichtete Hohlräume (8) bestehen, die räumlich voneinander abgetrennt angeordnet sind und keine Verbindung zueinander haben.

8. Noppenrasterverbindungssystem gemäß Anspruch 1, **dadurch gekennzeichnet, dass** die gleichartig strukturierten Flächen Luftaustrittsöffnungen (12) besitzen, die bevorzugt im Bereich der Fußpunkte der im Eingriff befindlichen Noppen (2, 14.6, 14.7) angeordnet sind.

9. Noppenrasterverbindungssystem gemäß Anspruch 1, **dadurch gekennzeichnet, dass** die Verbindungselemente aus einer Vielzahl von ausreichend formstabilen und elastischen Materialien, wie Hart- und Weichkunststoffen, Schaumstoffen, Gummi, Silikon, Neopren, Metall oder textilem Material homogen oder in Verbund, wie Grundkörper/Aufsatzteile, textiler Überzug, entsprechend der Anforderungen des jeweiligen Anwendungsfalles hergestellt werden und das aus verschiedenen Materialien hergestellte Verbindungselemente miteinander verbunden werden können.

10. Verfahren zur Herstellung einer Verbindung mit einem Noppenrasterverbindungssystem nach Anspruch 1

11. Verwendung des Noppenrasterverbindungssystem gemäß zumindest einem der Ansprüche 1 bis 9 als Verschluss für Metallbleche oder Hartkunststoffe, als Verbindung zwischen Werkzeug und Werkzeugträger, als Verbindung für Bekleidungsstücke, Wetterbekleidung und Schuhe, als Verbindungselement für medizinische Anwendungen, für Anwendungen mit hohen hygienischen Anforderungen oder in Form eines Bandes.

## Claims

1. Knob pattern connection system, consisting of at least two similar connection components with structured surfaces, equipped with a nub-like shape of the surface, whose knobs (2) (14.6 und 14.7) produce a self-adjusting, positive-locking connection between the connection components of the knob pattern connection system during the compression of the connection system, wherein the basic bodies of the knobs (2) (14.6 and 14.7) are designed as threefold or fourfold segmented rotation body, and the rotation body is equipped with at least one head (2.1), (14.1), with conically designed sliding surfaces (2.2 and 2.3), (14.5) and recesses (2.4), (11), and aligned in a rectangular or hexagonal grid, in such a distance that the knobs (2), (14.6 and 14.7) of the components to be connected glide to each other when joining and become stuck one into another or interlock, wherein the single knobs (2), (14.6 and 14.7) geometrically merge one into another at the head of the averted component **characterised in that** a double-sided usability is produced, being the connection component (5) equipped with a knob structure on the upper and under part, and by vertically duplicating downwards the surface having a nub-like structure, made of threefold or fourfold segmented rotation bodies, so that at each point between the original surface and its copy there is a distance and between these two surfaces a volume body is geometrically extruded, wherein a horizontal cut always runs through the focus of the so designed connection component and leads to an end-to-end triangular or rectangular grid (13), and the under part of the connection components is designed analogue at the upper side of the connection components, so that the under and upper part are separated connection surfaces, having one and the same structure.

2. Knob pattern connection system according to claim 1, **characterised in that** the polygon forming the threefold or fourfold segmented rotation body (1) begins at the head (2.1) of this body, and from there it leads downwards on the right in an angle α by forming the first sliding surface, and then it leads downwards on the left in an angle β, on the left or upwards on the left by forming a recess (2.4), then in an angle α on the right downwards, by forming the second sliding surface (2.3) (figures 14, 20, 21 and 27).

3. Knob pattern connection system according to claim 1, **characterised in that** the surface of the threefold segmented rotation body is formed by a vertical rotation and the subsequent copy of the polygon (1) around the vertical axle through the original point of the polygon (1) through 360° in three angle steps of respectively 120°, wherein each reshaped polygon (1) gets connected to a surface with the previous polygon (1) by geometric extrusion, so that the borders of the upper part of the threefold segmented rotation body, the first / upper sliding surface and the recess are cut in a comprehensive, radially symmetric way so that this part of the knobs (2) forms a hexagon in the plan view.

4. Knob pattern connection system according to claim 1, **characterised in that** the surface of the fourfold segmented rotation body is formed by a vertical rotation and the subsequent copy of the polygon (1) around the vertical axle through the original point of the polygon (1) through 360° in four angle steps of respectively 90°, wherein each reshaped polygon (1) gets connected to a surface with the previous polygon (1) by geometric extrusion, so that the borders of the upper part of the fourfold segmented rotation body, the first / upper sliding surface and the recess are cut in a comprehensive, radially symmetric way so that this part of the knobs (2) forms an octagon in the plan view.

5. Knob pattern connection system according to claim 1, **characterised in that** the recesses can be produced by bent up brackets (11) in continuous sliding surfaces (14.5).

6. Knob pattern connection system according to claim 1, **characterised in that** this system is a positive-locking and permanently closing unbreakable knob pattern connection system or **characterised in that** it is a positive-locking and breakable knob pattern connection system.

7. Knob pattern connection system according to claim 1, **characterised in that** the two surfaces having a similar structure and positioned at the interference do completely touch one another at the contact surfaces (9) and **characterised in that** between the two surfaces (contact surfaces) positioned at the interference there are cavities aligned towards the grid (8), being separately aligned one from another, without any connection one with another.

8. Knob pattern connection system according to claim 1, **characterised in that** the surfaces having a similar structure are equipped with air outlets (12) being preferably aligned in the area of the base points of the knobs positioned at the interference (2, 14.6, 14.7).

9. Knob pattern connection system according to claim 1, **characterised in that** the connection components are made from a large number of sufficiently dimensionally stable and elastic materials like rigid and soft plastics, foam materials, rubber, silicone, neoprene, metal, or textile material, of a homogeneous or composite type, like basic bodies / add-on parts, textile coating, according to the requirements of the respective application case, and **characterised in that** the connection components made from different materials can be connected one with another.

10. Method for the manufacture of a connection with a knob pattern connection system according to claim 1.

11. Use of the knob pattern connection system according to at least one of the claims 1 to 9 as a closer for metal sheets or hard plastics, as connection between the tool and the tool support, as connection for clothing, weather ware, and shoes, as connection element for medical applications, for applications with high hygienic demands, or in the form of a belt.

## Revendications

1. Système d'assemblage à boucles en grille, au moins constitué de deux éléments d'assemblage identiques dotés de deux faces structurées, qui disposent sur les deux faces d'un façonnage type boucles de surface, dont les boucles (2),(14.6 et 14.7) réalisent un assemblage auto-ajustant par complémentarité de forme entre les éléments d'assemblage du système d'assemblage à boucles en grille lorsque les éléments d'assemblage sont pressés l'un sur l'autre, dans lequel les corps de base des boucles (2) (14.6 et 14.7) sont conçus comme des corps de rotation à triple et quadruple segments, les corps de rotation ont au moins via un embout (2.1), (14.1), des surfaces de glissement coniques (2.2 et 2.3), (14.5) et des contre-dépouilles (2.4), (11), et sont alignés dans une grille rectangulaire ou hexagonale, à une distance telle que les boucles (2), (14.6 et 14.7) des pièces à relier coulissent l'une dans l'autre lors de l'assemblage et se bloquent ou s'enchevêtrent l'une contre l'autre, dans lequel les différentes boucles (2), (14.6 et 14.7) dans la partie inférieure, s'emboîtent de manière géométrique, **caractérisé en ce qu'**il existe une possibilité d'utilisation sur deux faces, l'élément d`assemblage(5) disposant de structures à boucles aussi bien sur la face supérieure que sur la face inférieure, et la surface structurée en boucles constituée de corps de rotation à triple ou quadruple segments étant dupliquée verticalement vers le bas, de telle sorte qu'il existe un intervalle à chaque emplacement entre la surface d'origine et sa copie et qu'un corps volumique est extrudé de manière géométrique entre ces deux surfaces, dans lequel une coupe horizontale au travers du centre de gravité de l'élément d'assemblage ainsi formé conduit systématiquement à une grille triangulaire ou rectangulaire traversante 13) et dans lequel la face inférieure des éléments d'assemblage est constituée de manière similaire à la face supérieure des éléments d'assemblage, et par conséquent la face inférieure et la face supérieure sont des surfaces d'assemblage séparées de même structure.

2. Système d'assemblage à boucles en grilles selon la revendication 1, **caractérisé en ce que** le polygone (1) formant le corps de rotation à triple ou quadruple segments commence à la pointe (2.1) de ce corps, se prolonge à parti de là vers la droite et vers le bas en formant un angle α et constitue la première surface de glissement, puis vers la gauche et vers le bas en formant un angle β, se prolonge vers la gauche ou vers la gauche vers le haut et constitue la contre-dépouille (2.4), puis se prolonge vers la droite et vers le bas en formant un angle α et constitue la deuxième surface de glissement(2.3) (figures 14,20,21,27).

3. Système d'assemblage à boucles en grilles selon la revendication 1, **caractérisé en ce que** la surface des corps de rotation à triple segments est formé par une rotation verticale et donc une copie du polygone (1) autour d'un axe vertical au travers du point d'origine du polygone(1) de 360° par trois pas angulaires de 120°, dans lequel chaque nouveau polygone (1) ainsi constitué est relié avec le polygone qui le précède (1) par extrusion géométrique sur une face et les arêtes de la partie supérieure du corps de rotation à triple segments, englobant la première surface de glissement supérieure et la contre-dépouille, comportent des découpes symétriquement radiales, de telle sorte que cette partie des boucles (2) forme un hexagone en vue de dessus.

4. Système d'assemblage à boucles en grilles selon la revendication 1, **caractérisé en ce que** la surface des corps de rotation à quadruple segments est formé par une rotation verticale et donc une copie du polygone(1)autour d'un axe vertical au travers du point d'origine du polygone (1) de 360° par quatre pas angulaires de 90°, dans lequel chaque nouveau polygone (1) ainsi constitué est relié avec le polygone qui le précède (1) par extrusion géométrique sur une face et les arêtes de la partie supérieure du corps de rotation à triple segments, englobant la première surface de glissement supérieure et la contre-dépouille, comportent des découpes symétriquement radiales, de telle sorte que cette partie des boucles forme un octogone en vue de dessus.

5. Système d'assemblage à boucles en grilles selon la revendication 1, **caractérisé en ce que** les contre-dépouilles peuvent être fabriquées en relevant les rabats(11) dans les surfaces de glissement continu (14.5).

6. Système d'assemblage à boucles en grilles selon la revendication 1 caractérisé en que celui-ci est un système d'assemblage à boucles par complémentarité de forme et fermeture permanente inamovible ou celui-ci est un système d'assemblage à boucles par complémentarité de forme et de nouveau amovible.

7. Système d'assemblage à boucles en grilles selon la revendication 1,**caractérisé en ce que** les deux faces à structure analogue en contact, sont en contact sur toute la surface au niveau des faces de contact(9) et entre les deux faces en contact (faces de contact) des cavités (8) alignées au niveau de la grille sont séparées les unes des autres dans l'espace sans aucune jonction commune

8. Système d'assemblage à boucles en grilles selon la revendication 1, **caractérisé en ce que** les faces à structures similaires (12) ont des ouvertures de sortie d'air (12), disposées de préférence au niveau des points d'appui des boucles (2, 14.6, 14.7) en contact.

9. Système d'assemblage à boucles en grilles selon la revendication 1, **caractérisé en ce que** les éléments d'assemblage sont fabriqués à partir d'une multitude de matériaux suffisamment rigides et élastiques, comme les matières plastiques dures et souples, les mousses, le caoutchouc, le silicone, le néoprène, le métal ou le matériau textile, homogènes ou composite, comme les éléments de base/pièces rapportées, le revêtement textile, en conformité avec les exigences applicables pour chaque utilisation et les éléments d'assemblage constitués de matériaux divers peuvent être reliés entre eux.

10. Procédé de réalisation d'un assemblage avec Système d'assemblage à boucles en grilles selon la revendication 1

11. Utilisation d'un système d'assemblage à boucles en grille selon l'une quelconque des revendications 1 à 9 pour servir d'obturateur pour les tôles métalliques ou les matières plastiques dures, pour assurer l'assemblage entre l'outil et le porte-outil, comme agent liant pour les vêtements, les vêtements de pluie et les chaussures, comme élément de liaison pour les applications médicales, pour les applications avec des exigences élevées au niveau de l'hygiène ou sous la forme d'une bande.
